# FASCICULE DE BREVET EUROPEEN

(11) **EP 3 667 890 B1**
(45) Date de publication et mention de la délivrance du brevet: **15.07.2026**
(21) Numéro de dépôt: 19212240.6
(22) Date de dépôt: 28.11.2019
(51) Int. Cl.: H02M 5/458, H02M 7/483

(54) **COMMANDE DE CELLULES DE PUISSANCE D'UN VARIATEUR DE VITESSE EN FONCTION DE TENSIONS REDRESSÉES**
STEUERUNG VON LEISTUNGSZELLEN EINES DREHZAHLREGLERS IN ABHÄNGIGKEIT VON DEN GLEICHGERICHTETEN SPANNUNGEN
CONTROL FOR POWER CELLS OF A VARIABLE SPEED DRIVE ACCORDING TO RECTIFIED VOLTAGES

(30) Priorité: 13.12.2018 FR 1872818
(43) Date de publication de la demande: 17.06.2020
(73) Titulaire: Schneider Toshiba Inverter Europe SAS, 27120 Pacy sur Eure (FR)
(72) Inventeur: DEVOS, Thomas, 78955 Carrières sous Poissy (FR); MALRAIT, François, 27120 Jouy sur Eure (FR)
(74) Mandataire: Plasseraud IP

(56) Documents cités:
- CN-A- 108 933 543
- DE-A1- 102014 008 399
- US-B1- 6 205 042

## Description

### Domaine technique de l'invention

L'invention concerne la gestion d'un variateur de vitesse en charge de l'alimentation d'un dispositif électrique tel qu'un moteur électrique par exemple.

### Etat de la technique

Selon une topologie de puissance, une haute tension est fournie par un variateur de vitesse en mettant en série un certain nombre de convertisseurs basse tension (que l'on nomme alors cellules de puissance ou *"power cell"* en anglais). La commande de ces cellules de puissance permet de fournir une tension à plusieurs niveaux, ou multi-niveaux, chaque cellule de puissance ajoutant une tension permettant d'atteindre des niveaux de tension successifs.

On entend par basse tension, selon les normes européennes, des tensions comprises entre 0 et 1000 volts en régime de tension alternative et entre 0 et 1500 volts en régime de tension continue. On entend par haute tension, des tensions supérieures à 1000 volts en régime de tension alternative et supérieures à 1500 volts en régime de tension continue.

Par exemple, le variateur de vitesse peut comprendre N cellules de puissance, N étant supérieur ou égal à 2. Lorsque le variateur de vitesse fournit une alimentation triphasée, il peut comprendre 3*N cellules de puissance, N cellules de puissance étant dédiées à chacune des trois phases.

Dans les topologies de variateur de vitesse multi-niveaux, seules les mesures de tension moteur peuvent être disponibles pour réduire le coût du produit, et non les tensions individuelles redressées, ou tensions bus courant continu DC. Ces tensions redressées correspondent aux tensions en sortie d'un pont redresseur (pont à diodes ou pont à thyristors principalement) à l'entrée de chacune des cellules de puissance du variateur de vitesse.

Dans l'architecture multi-niveaux évoquée ci-dessus, les tensions de sortie de chaque cellule de puissance sont générées en appliquant un rapport cyclique à la tension redressée de la cellule de puissance. La tension redressée, ou tension bus DC, de chaque cellule de puissance est donc nécessaire pour calculer les rapports cycliques à appliquer afin d'atteindre une tension cible de sortie sur le moteur.

Selon des solutions de l'art antérieur, une tension redressée fixe et commune à toutes les cellules de puissance est considérée, basée sur une valeur théorique des bus DC dans le cas idéal.

Une telle solution induit cependant une erreur sur la tension de sortie appliquée au moteur car, en pratique, les tensions redressées des cellules de puissance sont différentes les unes des autres. En effet, différentes perturbations sont présentes et affectent les niveaux des tensions redressées de chaque cellule de puissance (tension en entrée du variateur de vitesse, transformateur, etc.).

Une telle erreur peut être compensée par des mesures des tensions moteur, ce qui implique cependant d'avoir des capteurs de tension moteur précis, afin qu'un correcteur puisse asservir les tensions générées en sortie du variateur de vitesse. La référence de tension peut donc être composée de deux termes : un terme direct et une correction provenant du correcteur.
Plus l'erreur du terme direct utilisant la connaissance des tensions redressées est grande, plus le correcteur devra agir pour rejeter cette erreur. La réalisation de la tension dépendra donc de la dynamique du correcteur et impacte la performance générale du contrôle.

De plus, des capteurs additionnels peuvent être prévus afin de diagnostiquer les cellules de puissance. Par exemple, une sonde de température peut être prévue sur le transformateur en amont du variateur de vitesse par exemple. Aucun diagnostic n'est cependant prévu pour l'étage d'entrée du variateur de vitesse.

Il existe donc un besoin d'améliorer le contrôle de la tension de sortie délivrée par le variateur de vitesse au moteur en rejetant les différentes perturbations du système de conversion de puissance électrique (gain variable du transformateur, temps mort sur les commutations d'interrupteurs des cellules de puissance). Le document DE 102014008399 divulgue un circuit électronique ne nécessitant pas une mesure de tension pour chaque sous-unité du circuit. Toutefois, ce circuit nécessite tout de même plusieurs capteurs.

La présente invention résout les inconvénients mentionnés ci-dessus.

### Exposé de l'invention

Un premier aspect de l'invention concerne un procédé de détermination de tensions de sortie de redresseurs tel que mentionné dans la revendication 1.

Le terme de « tension moteur » est utilisé ci-après pour désigner une tension aux bornes du dispositif électrique alimenté par le variateur de vitesse.

Ainsi, il est possible d'accéder à toutes les valeurs de tensions redressées en minimisant le nombre de mesures effectuées.

P est égal au nombre de cellules de puissance du variateur de vitesse et, à chaque itération, une unique cellule de puissance peut être activée, les cellules de puissances activées pour deux itérations différentes, étant distinctes.

Un tel mode de réalisation permet d'accéder aisément à chacune des tensions redressées des cellules de puissance.

Le procédé selon l'invention permet ainsi d'accéder aux tensions redressées des cellules de puissance, sans nécessiter l'ajout de capteurs supplémentaires.

Le procédé comprend en outre, lors d'une phase courante d'alimentation du dispositif électrique, pour chaque cellule de puissance, l'adaptation d'un ordre de commande de la cellule de puissance en fonction de la tension de sortie du redresseur associée à ladite cellule de puissance.

Ce mode de réalisation permet ainsi la réalisation d'une tension moteur cible ne nécessitant que peu voire pas de correction. Une meilleure dynamique dans la réalisation de la tension moteur cible est ainsi permise.

En complément, l'adaptation d'un ordre de commande d'une cellule de puissance comprend la détermination d'un rapport cyclique de la cellule de puissance en fonction de la tension de sortie du redresseur associée à la cellule de puissance.

Selon un mode de réalisation, le procédé peut comprendre en outre l'analyse des tensions de sortie du redresseur obtenues en vue de détecter une déviation par rapport à un fonctionnement nominal.

Il est ainsi possible de prévoir des défauts dans l'étage de puissance et de procéder à une maintenance préventive.

Selon un mode de réalisation, le procédé peut être répété à plusieurs instants distincts, et l'analyse des tensions de sortie des redresseurs peut comprendre la détermination de tendances d'évolution des tensions de sortie des redresseurs. des cellules de puissance, et la comparaison des tendances avec un fonctionnement nominal.

Il est ainsi possible de prévoir des défauts dans l'étage de puissance et de procéder à une maintenance préventive.

Selon un mode de réalisation, le procédé peut être initié suite à l'arrêt du dispositif électrique.

Ainsi, le procédé n'interrompt pas le fonctionnement du dispositif électrique.

En complément, le procédé peut être initié automatiquement sur détection de l'arrêt du dispositif électrique.

Aucune intervention d'un opérateur n'est ainsi requise. En complément, le procédé peut être initié automatiquement à une fréquence donnée, à l'arrêt du dispositif électrique.

De manière alternative, le procédé peut être initié manuellement suite à l'arrêt du dispositif électrique.

Une vérification du fonctionnement des cellules de puissance peut ainsi être mise en œuvre par un opérateur.

Un deuxième aspect de l'invention concerne un programme d'ordinateur exécutable par un processeur et comprenant des instructions pour, lorsqu'il est exécuté par le processeur, mettre en œuvre les étapes d'un procédé selon le premier aspect de l'invention.

Un troisième aspect de l'invention concerne un dispositif de commande d'un variateur de vitesse tel que énoncé dans la revendication 9.

Un quatrième aspect de l'invention concerne un variateur de vitesse tel qu'énoncé dans la revendication 10.

### Brève description des figures

A titre d'exemple seulement, les modes de réalisation de l'invention seront décrits en référence aux dessins, parmi lesquels :
[Fig. 1] - la figure 1 illustre un système de pilotage de l'alimentation d'un dispositif électrique selon un mode de réalisation de l'invention ;
[Fig. 2] - la figure 2 est un diagramme illustrant les étapes d'un procédé selon un mode de réalisation de l'invention ;
[Fig. 3] - la figure 3 illustre la structure d'un dispositif de commande selon un mode de réalisation de l'invention.

### Description détaillée

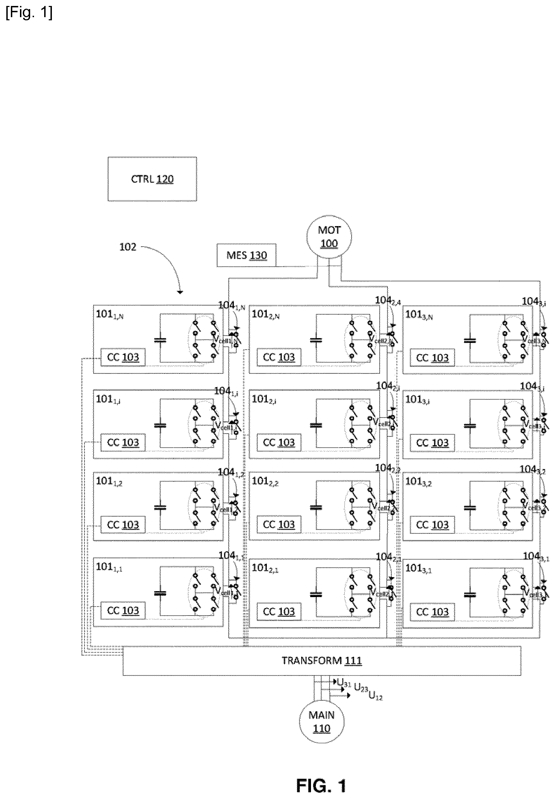

La figure 1 présente un système d'alimentation d'un dispositif électrique, tel qu'un moteur électrique 100 (moteur à induction par exemple), alimenté par une alimentation variable triphasée. Un tel moteur est donné à titre illustratif, mais ne saurait restreindre l'invention à ce seul exemple, l'invention étant applicable à tout dispositif électrique alimenté par un variateur de vitesse comprenant plusieurs cellules de puissance.

Le variateur de vitesse comprend un transformateur 111 recevant une alimentation variable triphasée du secteur 110. Le transformateur 111 peut être un transformateur à multi-enroulements capable de délivrer des tensions triphasées à plusieurs cellules de puissance décrites ci-après.

Le variateur de vitesse 102 selon l'invention peut comprendre un étage de puissance comprenant une ou plusieurs cellules de puissance basse tension 101. Dans l'exemple illustré sur la figure 1, le moteur reçoit une alimentation triphasée et le variateur de vitesse 102 comprend 3*N cellules de puissance, avec N cellules de puissance dédiées à chaque phase, N étant supérieur ou égal à 2.

En référence à la figure 1, un système à 3*N cellules de puissance est représenté. Toutefois, l'invention s'applique indifféremment à un système à 3*(N+1) cellules de puissance, une cellule de puissance étant réservée par phase en cas de panne de l'une des cellules de puissance active. Un tel exemple est donné à des fins illustratives uniquement. L'exemple d'une alimentation triphasée est considéré mais l'invention s'applique également à un système à N ou N+1 cellules de puissance. L'invention s'applique également à un système à N+2 (ou plus de N+2) cellules de puissance (ou 3*(N+2) pour une alimentation triphasée), avec deux cellules de puissance de remplacement par phase. De plus, l'invention est applicable à un nombre de phases différent de trois. En outre, le nombre de cellules de puissance peut différer par phase, auquel cas chaque phase comprend un nombre Ni de cellules de puissance, i étant un indice de phase. Dans la suite de l'exposé, il est considéré, à titre illustratif uniquement, le cas d'une alimentation triphasée avec le même nombre de cellules de puissance N pour chacune des phases.

Chaque cellule de puissance 101 reçoit en entrée l'alimentation triphasée issue du secondaire du transformateur 111 et peut comprendre un redresseur (non représenté sur la figure 1) en entrée, le redresseur étant apte à redresser l'alimentation triphasée reçue de manière à fournir une tension continue. La tension redressée continue obtenue pour chaque cellule de puissance 101 est aussi appelée tension bus courant continu, DC, ou tension bus. Le redresseur peut comprendre un pont de diodes, un pont à thyristors ou tout autre système connu pour redresser une tension.

En sortie du redresseur, chaque cellule de puissance 101 peut comprendre une capacité apte à stocker de l'énergie électrique, ainsi qu'un module de génération d'un signal de modulation par largeur d'impulsions PWM (pour « *Pulse Width Modulation »* en anglais). Un tel module de génération peut comprendre un pont en H comprenant quatre interrupteurs commandés deux par deux. Un système d'électronique de puissance utilisant un tel principe de tension hachée applique au moteur 100, par phase, une tension qui est proportionnelle à une ou plusieurs tensions redressées. En moyenne, la proportion appliquée correspond au ratio entre la tension ciblée en sortie de la cellule de puissance et la tension redressée de référence (définie ci-après). Le fonctionnement d'un pont en H est bien connu et ne sera pas décrit davantage dans la présente demande.

Les interrupteurs du pont en H peuvent être des transistors de type IGBT (pour « *Insulated Gate Bipolar Transistor* ») qui présentent l'avantage de pouvoir être commutés rapidement.

Les interrupteurs d'une cellule de puissance 101 sont contrôlés par une cellule de commande 103 de la cellule de puissance 101.

Le système comprend en outre un dispositif de commande 120 apte à contrôler le fonctionnement des cellules de puissance 101 du variateur de vitesse 102 de manière à piloter l'alimentation électrique du moteur 100. A cet effet, le dispositif de commande 120 peut commander les cellules de contrôle 103 des cellules de puissance 101. Le dispositif de commande 120 peut en outre commander des interrupteurs 104 permettant de mettre en série un sous-ensemble des N cellules de puissance pour chaque phase. En variante, ces interrupteurs sont commandés par le dispositif de commande 120 par l'intermédiaire des cellules de contrôle 103.

Les cellules de puissance 101 peuvent recevoir des signaux de commande depuis le dispositif de commande 120 à partir desquels les cellules de puissance 101 peuvent commander les commutations des interrupteurs du pont en H.

Les tensions triphasées, ou tensions moteur, alimentant le moteur 100 sont ainsi obtenues en sommant les tensions de sortie PWM des cellules de puissance 101, indiquées V_{cell} sur la figure 1, pour lesquelles les interrupteurs 104 sont ouverts (appelées « *cellules actives* » ci-après). Les interrupteurs 104 permettent de « *contourner* » (« *bypass* » en anglais) les cellules de puissance 101 sans commander les interrupteurs du pont en H des cellules de puissance. De tels interrupteurs 104 sont toutefois optionnels en ce que les cellules de puissance 101 peuvent être désactivées en commandant leur pont en H de manière à avoir un rapport cyclique nul, et donc une tension de sortie nulle de la cellule de puissance.

Le système selon l'invention comprend en outre un moyen de mesure 130 des tensions triphasées alimentant le moteur. Le moyen de mesure 130 est apte à transmettre la ou les tensions moteur mesurées au dispositif de commande 120.

Le dispositif de commande 120 selon l'invention est configuré pour contrôler les différentes cellules de puissances 101, ainsi que les interrupteurs de bypass directement ou indirectement (directement ou via les cellules de contrôle 103). En particulier, selon l'invention, le dispositif de commande 120 est apte à contrôler les cellules de puissance 101 ou les interrupteurs de bypass 104 afin que certaines cellules ne fournissent pas de tension, et donc que la tension moteur ne soit fournie que par une cellule de puissance par exemple. Ainsi, dans un mode de réalisation dans lequel une seule cellule de puissance est activée à la fois, une tension moteur mesurée permet d'accéder à la tension de sortie de la cellule de puissance choisie, comme détaillé ultérieurement, et elle permet ainsi d'accéder à la tension bus DC à partir du rapport cyclique appliqué à la cellule de puissance.

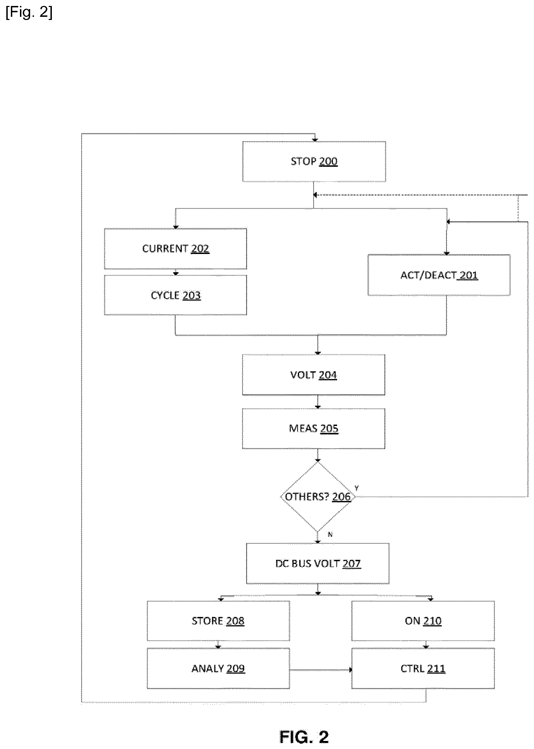

La figure 2 est un diagramme illustrant les étapes d'un procédé selon un mode de réalisation de l'invention.

A une étape 200, le procédé selon l'invention est mis en œuvre. Une telle mise en œuvre peut être consécutive à l'arrêt du moteur 100. Par exemple, suite à l'arrêt du moteur 100, le procédé est déclenché automatiquement, ou manuellement, via une interface homme machine du dispositif de commande 120.

A une étape 201, le dispositif de commande 120 contrôle les interrupteurs 104 ou les ponts en H des différentes cellules, de manière à activer un sous-ensemble des cellules de puissance du variateur de vitesse 102, par exemple uniquement la première cellule 101_{1,1} de la première phase. Le fonctionnement de modes de réalisation dans lequel plusieurs cellules de puissance sont activées simultanément sera décrit ultérieurement, la figure 2 étant décrite dans le cadre d'un mode de réalisation reposant sur des activations successives des cellules de puissances (une seule cellule de puissance activée à chaque itération)

En parallèle, à une étape 202, le dispositif de commande 120 détermine une valeur de tension à appliquer au variateur de vitesse 102. Cette tension à appliquer peut être directe, ou calculée par un régulateur de courant par exemple, permettant de maitriser le courant de sortie du variateur de vitesse passant dans le moteur 100.

A une étape 203, un rapport cyclique, ou « *duty cycle* »*,* à appliquer à la cellule de puissance activée 101_{1,1} est déterminé par le dispositif de commande 120 afin de réaliser une tension cible de sortie V₀ à appliquer sur le moteur 100. Pour les autres cellules inactives, soit les interrupteurs de bypass 104 sont fermés, soit les rapports cycliques sont nuls.

Le variateur de vitesse 102 est alimenté à l'étape 204 et les cellules de puissance 101 sont commandées conformément aux étapes 202 et 203.

La tension moteur est alors mesurée à une étape 205, par exemple par un capteur, puis reçue par le dispositif de commande 120, la tension moteur étant fournie par la première cellule 101_{1,1}.

Le dispositif de commande 120 détermine à une étape 206 si toutes les cellules de puissance 101 ont été successivement activées ou non. Si tel est le cas, le procédé passe à l'étape 207. De manière plus générale, un nombre d'itérations P est prédéfini, P étant supérieur ou égal à 2. Ainsi, un indice d'itération peut être comparé à P à l'étape 207. Si l'indice d'itération est égal à P, le procédé passe à l'étape 207.

Dans le cas contraire, le procédé retourne à l'étape 201, en activant la cellule de puissance suivante (par exemple la cellule de puissance 101_{1,2} après la cellule de puissance 101_{1,1}), ou les cellules de puissance suivantes, dans le cas général qui sera décrit ultérieurement, et en désactivant toutes les autres cellules de puissance 101. Dans un mode de réalisation alternatif, le procédé retourne à l'étape 201 mais également à l'étape 202. Dans ce mode de réalisation alternatif, les étapes 202 et 203 sont mises en œuvre pour chaque itération du procédé, de manière différenciée.

A partir des tensions moteurs mesurées aux étapes 205 successives, les tensions redressées des cellules de puissance sont déduites à une étape 206 par le dispositif de commande 120 selon l'invention.

Afin de déterminer la tension redressée d'une cellule de puissance, le dispositif de commande 120 prend en compte la tension moteur mesurée et le rapport cyclique qui a été appliqué.

Il convient de noter que, dans le mode de réalisation dans lequel le procédé est itéré 3*N fois (dans le cas où le variateur de vitesse comprend N cellules de puissance par phase parmi trois phases) en activant une unique cellule de puissance à chaque fois, la tension redressée de la cellule de puissance activée lors d'une itération donnée, peut être déterminée à l'issue de l'itération donnée (et non à l'issue de l'ensemble des itérations).

A l'issue de la détermination des tensions redressées des cellules de puissance 101 du variateur de vitesse 102, le procédé passe à l'étape 208.

A l'étape 208, les tensions redressées des cellules de puissance du variateur de vitesse sont stockées dans une mémoire du dispositif de commande 120. Les tensions redressées peuvent être stockées en remplacement des précédentes valeurs des tensions redressées. En variante, les tensions redressées sont stockées en association avec la date de mise en œuvre de l'itération du procédé selon l'invention, ce qui permet de mettre en œuvre un suivi de l'évolution des tensions redressées pour chacune des cellules de puissance 101 du variateur de vitesse 102.

A l'étape 209 optionnelle, une analyse des tensions redressées est mise en œuvre. Une telle analyse peut comprendre une comparaison avec des tensions redressées nominales, et le déclenchement d'une alerte en cas de déviation par rapport à l'une des tensions redressées nominales. Dans le cas où les tensions redressées sont stockées en association avec des dates respectives, une tendance d'évolution de la tension redressée peut être déterminée pour chaque cellule de puissance 101, et une alerte peut être générée en fonction d'une telle tendance.

La génération d'une alerte permet la mise en œuvre d'une maintenance préventive.

Indépendamment des étapes 208 et 209, le variateur de vitesse passe en mode « activé » ou « ready » en anglais à une étape 210, permettant de démarrer le moteur 100 à une étape 211.

Suite aux étapes 209 et 210, le dispositif de commande 120, sur réception d'une commande moteur, détermine une tension moteur cible et contrôle le variateur de vitesse 102 en fonction de la tension moteur cible et en fonction des tensions redressées précédemment déterminées, à l'étape 211. A cet effet, le dispositif de commande 120 détermine des rapports cycliques respectifs pour les cellules de puissance 101. La réalisation de la tension moteur cible est alors plus précise en ce que les tensions redressées des cellules de puissance sont connues et peuvent être mises à jour régulièrement (par exemple, à chaque arrêt du moteur électrique 100).

Selon certaines réalisations, un tel variateur de vitesse comprend en outre un correcteur corrigeant les commandes en entrée du dispositif de commande 120 en fonction des tensions mesurées sur le moteur électrique 100. Dans ce cas, le rôle d'un tel correcteur est réduit selon l'invention, ce qui permet d'améliorer la dynamique de la réalisation des tensions de sortie appliquées au moteur 100.

Le procédé peut ensuite être répété, à un instant ultérieur, par exemple suite à un nouvel arrêt du moteur électrique 100 à une étape 200.

Le procédé peut alternativement être répété à une fréquence donnée, par exemple, toutes les semaines, suite à l'arrêt du moteur électrique. Dans ce cas, un intervalle minimum d'une semaine sépare les mises en œuvre de deux itérations du procédé.

En référence à la figure 2, un mode de réalisation particulier impliquant l'activation d'une unique cellule de puissance à chaque itération a été décrit. Un tel mode est simple à mettre en œuvre, et la tension redressée de chaque cellule de puissance est accessible aisément une fois les tension moteur mesurées. De manière plus générale, l'invention peut prévoir à chaque itération, l'activation à l'étape 201 d'un sous-ensemble d'au moins une cellule de puissance, la réalisation d'une tension de sortie ou de tensions de sortie par le sous-ensemble à l'étape 204 et la mesure d'une ou deux tensions moteur à l'étape 205. En effet, il n'est pas utile de mesurer plus de deux tensions moteur en ce qu'une troisième tension moteur peut être déduite des première et deuxième tensions moteur (voir tensions U12, U23 et U31 décrites ci-après).

Les cellules de puissance à activer à chaque itération et les tensions moteur à mesurer à chaque itération peuvent être déterminées à partir d'une matrice prédéfinie. Une telle matrice est prédéfinie de manière à assurer qu'à l'issue de toutes les itérations, un nombre suffisant d'équations a été obtenu de manière à déterminer la valeur de chacune des inconnues du système d'équations (les 3*N tensions redressées des cellules de puissance par exemple, lorsque le variateur de vitesse comprend 3*N cellules de puissance). A cet effet, la matrice prédéfinie est de rang égal au nombre d'inconnues (soit 3*N).

Soit i l'indice de phase (variant de 1 à 3), soit k l'indice de cellule de puissance au sein d'une phase (variant de 1 à N dans un étage de puissance à 3*N cellules de puissance), une cellule de puissance de phase i et d'indice k :
- est activée avec un rapport cyclique r (entre -1 et 1) ;
- a une tension redressée VB(i,k), qui constitue une inconnue du système ;
- fournit une différence de potentiel r x VB(i,k)

Des vecteurs colonnes VBi comportant N composantes peuvent être définis, chaque composante d'indice k étant la valeur de la tension redressée VB(i,k).

Une combinaison de commandes d'activation de cellules d'un bras de l'étage de puissance dédié à la phase i peut être représentée par le vecteur ligne Ki comportant N valeurs (0 : cellule de puissance non active, 1 : cellule de puissance active).

La différence de potentiel Vi générée par le bras d'indice i est égale à la somme des différences de potentiel de toutes les cellules du bras, soit : Vi = Ki x VBi
Le moyen de mesure 130 décrit ci-avant peut être apte à fournir trois tensions composées entre phases U12 = V1-V2, U23 = V2-V3, et U31 = V3-V1. En variante, le moyen de mesure 130 est agencé de manière à mesurer les tensions V1, V2 et V3 directement.
Les trois mesures à un instant t correspondant à une itération du procédé (t pouvant être une date ou un indice d'itération du procédé), notamment de l'étape 205, peuvent être associées dans un vecteur colonne M_t égal à [ U12 ; U23 ; U31 ], soit : M_t = KALL_t x VBALL
dans lequel K0 est un vecteur nul de dimension identique à K1, K2 ou K3,
et KALL_t représente une matrice à 3 lignes et 3*N colonnes composée comme suit : [ K1 -K2 K0 ; K0 K2 -K3 ; -K1 K0 K3 ] ;
et VBALL représente un vecteur colonne de longueur 3N composé comme suit : [ VB1 ; VB2 ; VB3].

Les combinaisons K1 à K3 sont choisies selon l'invention de manière à ce qu'une matrice KALL_t_{ALL}, à 3*P lignes et 3*N colonnes, construite pour les temps (ou itérations) t1, t2, jusqu'à tP par «empilement » ou agrégation des matrices KALL_tᵤ pour u variant entre 1 à P, KALL_tALL soit une matrice de rang 3*N, de manière à pouvoir déterminer les 3*N inconnues du système (les tensions redressées des cellules de puissance).

Le mode de réalisation décrit en référence à la figure 2 est un cas particulier d'un tel mode de réalisation général.

Ce mode de réalisation particulier prévoit l'activation d'une unique cellule à chaque temps tᵤ, u étant un indice entre 1 et 3*N.

Lors de l'activation de la cellule d'indice « u- INT[(u-1)/N] *N » du bras « 1 + INT[(u-1)/N] » de l'étage de puissance, où INT représente la fonction partie entière, on obtient, avec un cas dans lequel N=3 (donné à titre d'exemple, sans que cela ne restreigne la portée de l'invention :
au temps t1, K1 = [ 1 0 0 ] ; K2 = [ 0 0 0 ] ; K3 = [ 0 0 0 ]. La matrice KALL_t1 vaut [ 1 0 0 0 0 0 0 0 0 ; 0 0 0 0 0 0 0 0 0 ; - 1 0 0 0 0 0 0 0 0] ;
au temps t2, K1 = [ 0 1 0 ] ; K2 = [ 0 0 0 ] ; K3 = [ 0 0 0 ]. La matrice KALL_t2 vaut [ 0 1 0 0 0 0 0 0 0 ; 0 0 0 0 0 0 0 0 0 ; 0 - 1 0 0 0 0 0 0 0].

Par construction de chaque matrice KALL_tu, la première ligne est constituée de 0 sauf le u-ème élément qui vaut 1. Il est bien entendu qu'après 3x3 temps selon la règle explicitée ci-dessus, les 9 premières lignes prises ensemble forment la matrice identité, ce qui garantit le rang 9 (soit le nombre d'inconnues du système).

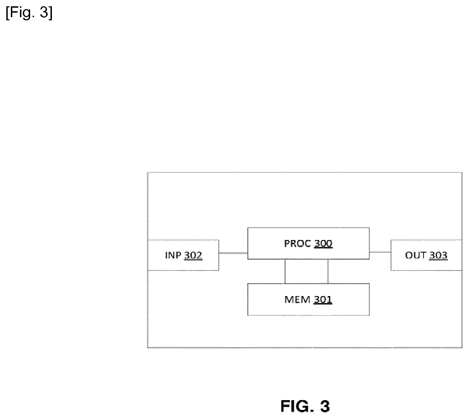

La figure 3 illustre la structure d'un dispositif de commande 120 selon un mode de réalisation de l'invention.

Le dispositif de commande 120 comprend un processeur 300 configuré pour communiquer de manière unidirectionnelle ou bidirectionnelle, via un ou des bus, avec une mémoire 301 telle qu'une mémoire de type « *Random Access Memory* »*,* RAM, ou une mémoire de type « *Read Only Memory* »*,* ROM, ou tout autre type de mémoire (Flash, EEPROM, etc.).

La mémoire 301 est apte à stocker, de manière permanente ou temporaire, au moins certaines des données utilisées et/ou issues de la mise en œuvre du procédé selon l'invention. En particulier, la mémoire 301 est apte à stocker les valeurs de tensions redressées des cellules de puissance, de manière optionnelle en association avec des dates respectives.

Le processeur 300 est apte à exécuter des instructions pour la mise en œuvre des étapes du procédé selon l'invention, illustré en référence à la figure 2.

Le dispositif de commande 120 peut en outre comprendre une interface d'entrée 302 et une interface de sortie 303 afin de communiquer avec les autres entités du système selon l'invention.

En particulier, l'interface d'entrée 302 est apte à recevoir des consignes de vitesse et le processeur 300 est apte à déterminer les tensions moteur cibles (une tension moteur cible par phase) à partir des consignes de vitesse.

L'interface de sortie 303 est apte à fournir des ordres de commande aux cellules de puissance 101 afin qu'elles réalisent les rapports cycliques, via leurs ponts en H notamment. A cet effet, les ordres de commande peuvent comprendre les ordres de commutation d'interrupteurs de type IGBT par exemple, du pont en H partiellement (uniquement les ordres des deux interrupteurs IGBT du haut pour chaque cellule de puissance) ou totalement (les quatre interrupteurs IGBT). Ces ordres de commutation peuvent être calculés par le dispositif de commande 120 en comparant les tensions de référence avec des signaux triangulaires correspondant à chaque cellule de puissance. Une telle technique est bien connue et ne sera pas détaillée davantage.

Bien que la présente invention ait été décrite ci-dessus en référence à des modes de réalisation particuliers, l'invention ne se limite aucunement aux formes décrites. L'invention est uniquement limitée par ce qui est défini dans les revendications et d'autres modes de réalisation que ceux décrits ci-dessus peuvent entrer dans la portée des revendications.

## Revendications

1. Procédé de détermination de tensions redressées de cellules de puissance d'un variateur de vitesse (102) en charge de l'alimentation d'un dispositif électrique (100), le variateur de vitesse comprenant Ni cellules de puissance (101) basse tension reliées en série pour chaque phase parmi plusieurs phases, N étant supérieur ou égal à 2, et i étant un indice de phase,
**caractérisé en ce que** le procédé comprend les opérations suivantes :
a) répétition des P itérations suivantes, P étant égal au nombre de cellules de puissance du variateur de vitesse :
i) activation (201) à chaque itération d'une unique cellule d'une phase et désactivation des autres cellules de puissance de ladite phase du variateur de vitesse, dans lequel ladite cellule activée est sélectionnée en fonction de commandes d'activation prédéfinies dépendant d'un indice d'itération ; les cellules de puissances activées pour deux itérations différentes étant distinctes ;
ii) détermination (203) d'un rapport cyclique de ladite cellule activée pour contrôler une tension de sortie par modulation par largeur d'impulsions de ladite cellule activée afin de réaliser une tension cible de sortie à appliquer au dispositif électrique (100);
iii) réception (205) d'au moins une tension de sortie du variateur de vitesse (102) aux bornes du dispositif électrique (100) pour au moins une phase,
et dans lequel le procédé comprend en outre, à l'issue des P itérations :
b) détermination (206), à partir des tensions de sortie du variateur de vitesse mesurées, de valeurs de tension redressée en sortie d'étages de redressement respectifs des cellules de puissance du variateur de vitesse ;
c) stockage (208) des valeurs de tension redressée déterminées, respectivement associées aux cellules de puissance du variateur de vitesse,
d) pour chaque cellule de puissance, adaptation d'un ordre de commande de la cellule de puissance comprenant la détermination d'un rapport cyclique de la cellule de puissance en fonction de la tension redressée associée à cette cellule de puissance, lors d'une phase courante d'alimentation du dispositif électrique (100),
dans lequel l'entier P et les commandes d'activation sont prédéfinis sous forme d'une matrice représentant les commandes d'activation et de rang égal au nombre de cellules de puissance du variateur de vitesse et dans lequel le variateur de vitesse comprend N cellules de puissance pour chaque phase parmi trois phases et, pour chaque itération d'indice t, t étant compris entre 1 et P : M_t = KALL_t × VBALL ; dans lequel KALL_t représente une matrice à 3 lignes et 3*N colonnes comprenant [K1 - K2 K0 ; K0 K2 -K3 ; -K1 K0 K3], dans lequel K1, K2 et K3 sont les commandes d'activation respectives des trois phases et sont des vecteurs de taille N prenant des valeurs binaires, une première valeur correspondant à une activation et une seconde valeur correspondant à une désactivation, dans lequel K0 est un vecteur nul de taille N,
dans lequel VBALL est un vecteur colonne de longueur 3N composé comme suit [VB1 ; VB2 ; VB3], dans lequel VB1, VB2 et VB3 sont des vecteurs de taille N des tensions redressées des cellules de puissance des trois phases respectives selon le rapport cyclique déterminé à l'étape ii);
dans lequel M_t est un vecteur de trois tensions mesurées aux bornes du dispositif électrique pour une itération donnée, les tensions mesurées correspondant aux trois tensions de sortie du variateur de vitesse.

2. Procédé selon la revendication 1, dans lequel l'adaptation d'un ordre de commande d'une cellule de puissance (101) comprend la détermination d'un rapport cyclique de la cellule de puissance (101) en fonction de la tension redressée associée à la cellule de puissance.

3. Procédé selon l'une des revendications précédentes, comprenant en outre l'analyse (209) des tensions redressées obtenues en vue de détecter une déviation par rapport à un fonctionnement nominal.

4. Procédé selon l'une des revendications 1 à 3, dans lequel le procédé est répété à plusieurs instants distincts, et dans lequel l'analyse (209) des tensions redressées comprend la détermination de tendances d'évolution des tensions redressées des cellules de puissance, et la comparaison des tendances avec un fonctionnement nominal.

5. Procédé selon l'une des revendications précédentes, le procédé étant initié suite à l'arrêt du dispositif électrique (100).

6. Procédé selon la revendication 5, dans lequel le procédé est initié automatiquement sur détection de l'arrêt du dispositif électrique (100).

7. Procédé selon la revendication 5, dans lequel le procédé est initié manuellement suite à l'arrêt du dispositif électrique (100).

8. Programme d'ordinateur exécutable par un processeur (300) et comprenant des instructions pour, lorsqu'il est exécuté par le processeur, mettre en œuvre les étapes d'un procédé selon l'une des revendications 1 à 7.

9. Dispositif de commande d'un variateur de vitesse (102) en charge de l'alimentation d'un dispositif électrique (100), le variateur de vitesse comprenant Ni cellules de puissance (101) basse tension reliées en série pour chaque phase parmi plusieurs phases, N étant supérieur ou égal à 2 et i étant un indice de phase, **caractérisé en ce que** le dispositif de commande comprend :
un processeur (300) apte à commander, par une interface de sortie, la répétition des P itérations suivantes, P étant égal au nombre de cellules de puissance du variateur de vitesse
i) activation (201) à chaque itération d'une unique cellule d'une phase et désactivation des autres cellules de puissance de ladite phase du variateur de vitesse, dans lequel ladite une cellule activée est sélectionnée en fonction de commandes d'activation prédéfinies dépendant d'un indice d'itération ; les cellules activées pour deux itérations différentes étant distinctes ;
ii) détermination d'un rapport cyclique de ladite cellule activée pour contrôler une tension de sortie par modulation par largeur d'impulsions de ladite cellule activée afin de réaliser une tension cible de sortie à appliquer au dispositif électrique (100);
iii) réception, via une interface d'entrée (302),d'au moins deux tensions de sortie du variateur de vitesse (102) aux bornes du dispositif électrique (100) pour deux phases;
le processeur (300) étant en outre apte à déterminer, à l'issue des P itérations, à partir des tensions de sortie du variateur de vitesse mesurées, de valeurs de tension redressée en sortie d'étages de redressement respectifs des cellules de puissance du variateur de vitesse, une mémoire (301) stockant les valeurs de tension redressée déterminées, respectivement associées aux cellules de puissance du variateur de vitesse;
le processeur étant configuré pour adapter pour chaque cellule de puissance, un ordre de commande de la cellule de puissance en déterminant un rapport cyclique de la cellule de puissance en fonction de la tension redressée associée à cette cellule de puissance,
dans lequel l'entier P et les commandes d'activation sont prédéfinis sous forme d'une matrice représentant les commandes d'activation et de rang égal au nombre de cellules de puissance du variateur de vitesse etdans lequel le variateur de vitesse comprend N cellules de puissance pour chaque phase parmi trois phases et, pour chaque itération d'indice t, t étant compris entre 1 et P : M_t = KALL_t × VBALL ;
dans lequel KALL_t représente une matrice à 3 lignes et 3*N colonnes comprenant [K1 - K2 K0 ; K0 K2 -K3 ; -K1 K0 K3], dans lequel K1, K2 et K3 sont les commandes d'activation respectives des trois phases et sont des vecteurs de taille N prenant des valeurs binaires, une première valeur correspondant à une activation et une seconde valeur correspondant à une désactivation, dans lequel K0 est un vecteur nul de taille N,
dans lequel VBALL est un vecteur colonne de longueur 3N composé comme suit [VB1 ; VB2 ; VB3], dans lequel VB1, VB2 et VB3 sont des vecteurs de taille N des tensions redressées des cellules de puissance des trois phases respectives selon le rapport cyclique déterminé à l'étape ii);
dans lequel M_t est un vecteur de trois tensions mesurées aux bornes du dispositif électrique pour une itération donnée, les tensions moteur mesurées correspondant aux trois tensions de sortie du variateur de vitesse.

10. Variateur de vitesse en charge de l'alimentation triphasée d'un dispositif électrique, le variateur de vitesse comprenant Ni cellules de puissance basse tension reliées en série pour chaque phase parmi plusieurs phases, N étant supérieur ou égal à 2 et i étant un indice de phase, et un dispositif de commande selon la revendication 9.

## Patentansprüche

1. Verfahren zur Bestimmung der gleichgerichteten Spannungen von Leistungszellen eines Drehzahlreglers (102), der für die Versorgung einer elektrischen Vorrichtung (100) zuständig ist, wobei der Drehzahlregler Ni Niederspannungs-Leistungszellen (101) umfasst, die für jede Phase zwischen mehreren Phasen in Reihe geschaltet sind, wobei N größer oder gleich 2 ist und i ein Phasenindex ist,
**dadurch gekennzeichnet, dass** das Verfahren ferner folgende Schritte umfasst:
a) Wiederholen der folgenden P Iterationen, wobei P gleich der Anzahl der Leistungszellen des Drehzahlreglers ist:
i) Aktivieren (201), bei jeder Iteration, einer einzelnen Zelle einer Phase und Deaktivieren der anderen Leistungszellen der Phase des Drehzahlreglers, wobei die aktivierte Zelle in Abhängigkeit von vorgegebenen Aktivierungsbefehlen ausgewählt wird, die von einem Iterationsindex abhängig sind, wobei die aktivierten Leistungszellen für zwei unterschiedliche Iterationen verschieden sind;
ii) Bestimmen (203) eines Tastverhältnisses der aktivierten Zelle, um eine Ausgangsspannung durch Pulsweitenmodulation der aktivierten Zelle zu regeln, um eine an die elektrische Vorrichtung (100) anzuwendende Ausgangszielspannung zu erreichen;
iii) Empfangen (205) mindestens einer Ausgangsspannung des Drehzahlreglers (102) an den Klemmen der elektrischen Vorrichtung (100) für mindestens eine Phase,
und wobei das Verfahren ferner nach Abschluss der P Iterationen umfasst:
b) Bestimmen (206), ausgehend von den gemessenen Ausgangsspannungen des Drehzahlreglers, von gleichgerichteten Spannungswerten am Ausgang der jeweiligen Gleichrichterstufen der Leistungszellen des Drehzahlreglers;
c) Speichern (208) der bestimmten gleichgerichteten Spannungswerte, die jeweils den Leistungszellen des Drehzahlreglers zugeordnet sind,
d) für jede Leistungszelle, Anpassen eines Steuerbefehls der Leistungszelle, das das Bestimmen eines Tastverhältnisses der Leistungszelle in Abhängigkeit von der dieser Leistungszelle zugeordneten gleichgerichteten Spannung bei einer Stromphase der Versorgung der elektrischen Vorrichtung (100) umfasst,
wobei die ganze Zahl P und die Aktivierungsbefehle in Form einer Matrix vorgegeben sind, die die Aktivierungsbefehle darstellt und einen Rang aufweist, der der Anzahl der Leistungszellen des Drehzahlreglers entspricht, und wobei der Drehzahlregler N Leistungszellen für jede Phase aus drei Phasen umfasst, und für jede Iteration des Index t, wobei t zwischen 1 und P liegt: M_t = KALL_t × VBALL;
wobei KALL_t eine Matrix mit 3 Zeilen und 3*N Spalten darstellt, die [K1 - K2 K0; K0 K2 -K3; -K1 K0 K3] umfasst, wobei K1, K2 und K3 die jeweiligen Aktivierungsbefehle der drei Phasen sind und Vektoren der Größe N sind, die binäre Werte annehmen, wobei ein erster Wert einer Aktivierung entspricht und ein zweiter Wert einer Deaktivierung entspricht, wobei K0 ein Nullvektor der Größe N ist,
wobei VBALL ein Spaltenvektor der Länge 3N ist, der wie folgt zusammengesetzt ist: [VB1; VB2; VB3], wobei VB1, VB2 und VB3 Vektoren der Größe N der gleichgerichteten Spannungen der Leistungszellen der jeweiligen drei Phasen gemäß dem in Schritt ii) bestimmten Tastverhältnis sind;
wobei M_t ein Vektor von drei an den Klemmen der elektrischen Vorrichtung für eine gegebene Iteration gemessenen Spannungen ist, wobei die gemessenen Spannungen den drei Ausgangsspannungen des Drehzahlreglers entsprechen.

2. Verfahren nach Anspruch 1, wobei das Anpassen eines Steuerbefehls einer Leistungszelle (101) das Bestimmen eines Tastverhältnisses der Leistungszelle (101) in Abhängigkeit von der der Leistungszelle zugeordneten gleichgerichteten Spannung umfasst.

3. Verfahren nach einem der vorhergehenden Ansprüche, ferner umfassend die Analyse (209) der erhaltenen gleichgerichteten Spannungen zum Erkennen einer Abweichung von einem Nennbetrieb.

4. Verfahren nach einem der Ansprüche 1 bis 3, wobei das Verfahren zu mehreren verschiedenen Zeitpunkten wiederholt wird, und wobei die Analyse (209) der gleichgerichteten Spannungen das Bestimmen von Trendverläufen der gleichgerichteten Spannungen der Leistungszellen und den Vergleich der Trends mit einem Nennbetrieb umfasst.

5. Verfahren nach einem der vorhergehenden Ansprüche, wobei das Verfahren nach dem Abschalten der elektrischen Vorrichtung (100) eingeleitet wird.

6. Verfahren nach Anspruch 5, wobei das Verfahren automatisch bei Erkennen des Abschaltens der elektrischen Vorrichtung (100) eingeleitet wird.

7. Verfahren nach Anspruch 5, wobei das Verfahren nach dem Abschalten der elektrischen Vorrichtung (100) manuell eingeleitet wird.

8. Von einem Prozessor (300) ausführbares Computerprogramm, das Anweisungen umfasst, um, wenn es vom Prozessor ausgeführt wird, die Schritte eines Verfahrens nach einem der Ansprüche 1 bis 7 durchzuführen.

9. Steuervorrichtung für einen Drehzahlregler (102), der für die Versorgung einer elektrischen Vorrichtung (100) zuständig ist, wobei der Drehzahlregler Ni Niederspannungs-Leistungszellen (101) umfasst, die für jede Phase zwischen mehreren Phasen in Reihe geschaltet sind, wobei N größer oder gleich 2 ist und i ein Phasenindex ist, **dadurch gekennzeichnet, dass** die Steuervorrichtung umfasst:
einen Prozessor (300), der in der Lage ist, über eine Ausgangsschnittstelle die Wiederholung der folgenden P Iterationen zu steuern, wobei P der Anzahl der Leistungszellen des Drehzahlreglers entspricht:
i) Aktivieren (201), bei jeder Iteration, einer einzelnen Zelle einer Phase und Deaktivieren der anderen Leistungszellen der Phase des Drehzahlreglers, wobei die eine aktivierte Zelle in Abhängigkeit von vorgegebenen Aktivierungsbefehlen ausgewählt wird, die von einem Iterationsindex abhängig sind; wobei die aktivierten Zellen für zwei unterschiedliche Iterationen verschieden sind;
ii) Bestimmen eines Tastverhältnisses der aktivierten Zelle, um eine Ausgangsspannung durch Pulsweitenmodulation der aktivierten Zelle zu regeln, um eine an die elektrische Vorrichtung (100) anzuwendende Ausgangszielspannung zu erreichen;
iii) Empfangen von mindestens zwei Ausgangsspannungen des Drehzahlreglers (102) über eine Eingangsschnittstelle (302) an den Klemmen der elektrischen Vorrichtung (100) für zwei Phasen;
wobei der Prozessor (300) ferner in der Lage ist, ausgehend von den P Iterationen aus den gemessenen Ausgangsspannungen des Drehzahlreglers gleichgerichtete Spannungswerte am Ausgang der jeweiligen Gleichrichtungsstufen der Leistungszellen des Drehzahlreglers zu bestimmen, wobei ein Speicher (301) die bestimmten gleichgerichteten Spannungswerte speichert, die jeweils den Leistungszellen des Drehzahlreglers zugeordnet sind;
wobei der Prozessor so konfiguriert ist, dass er für jede Leistungszelle einen Steuerbefehl der Leistungszelle anpasst, indem er ein Tastverhältnis der Leistungszelle in Abhängigkeit von der dieser Leistungszelle zugeordneten gleichgerichteten Spannung bestimmt,
wobei die ganze Zahl P und die Aktivierungsbefehle in Form einer Matrix vorgegeben sind, die die Aktivierungsbefehle darstellt und einen Rang aufweist, der der Anzahl der Leistungszellen des Drehzahlreglers entspricht, und wobei der Drehzahlregler N Leistungszellen für jede Phase aus drei Phasen umfasst, und für jede Iteration des Index t, wobei t zwischen 1 und P liegt: M_t = KALL_t × VBALL;
wobei KALL_t eine Matrix mit 3 Zeilen und 3*N Spalten darstellt, die [K1 - K2 K0; K0 K2 -K3; -K1 K0 K3] umfasst, wobei K1, K2 und K3 die jeweiligen Aktivierungsbefehle der drei Phasen sind und Vektoren der Größe N sind, die binäre Werte annehmen, wobei ein erster Wert einer Aktivierung entspricht und ein zweiter Wert einer Deaktivierung entspricht, wobei K0 ein Nullvektor der Größe N ist,
wobei VBALL ein Spaltenvektor der Länge 3N ist, der wie folgt zusammengesetzt ist: [VB1; VB2; VB3], wobei VB1, VB2 und VB3 Vektoren der Größe N der gleichgerichteten Spannungen der Leistungszellen der jeweiligen drei Phasen gemäß dem in Schritt ii) bestimmten Tastverhältnis sind;
wobei M_t ein Vektor von drei an den Klemmen der elektrischen Vorrichtung für eine bestimmte Iteration gemessenen Spannungen ist, wobei die gemessenen Motorspannungen den drei Ausgangsspannungen des Drehzahlreglers entsprechen.

10. Drehzahlregler, der für die dreiphasige Versorgung einer elektrischen Vorrichtung zuständig ist, wobei der Drehzahlregler Ni Niederspannungs-Leistungszellen umfasst, die für jede Phase zwischen mehreren Phasen in Reihe geschaltet sind, wobei N größer oder gleich 2 ist und i ein Phasenindex ist, und eine Steuervorrichtung nach Anspruch 9.

## Claims

1. A method for determining rectified voltages of power cells of a variable-speed drive (102) in charge of powering an electrical device (100), the variable-speed drive comprising Ni low-voltage power cells (101) connected in series for each phase among several phases, N being greater than or equal to 2, and i being a phase index,
**characterised in that** the method comprises the following operations of:
a) repeating the next P iterations, P being equal to the number of power cells of the variable-speed drive:
i) activating (201) at each iteration of one single cell of a phase and deactivating the other power cells of said phase of the variable-speed drive, wherein said activated cell is selected according to predefined activation commands dependent on an iteration index; the power cells activated for two different iterations being distinct;
ii) determining (203) a duty cycle of said cell activated to control an output voltage by pulse width modulation of said cell activated in order to achieve an output target voltage to be applied to the electrical device (100);
iii) receiving (205) at least one output voltage of the variable-speed drive (102) across the electrical device (100) for at least one phase,
and wherein the method further comprises, at the end of the P iterations:
b) determining (206), from the measured output voltages of the variable-speed drive, rectified voltage values at the output of respective rectifying stages of the power cells of the variable-speed drive;
c) storing (208) the determined rectified voltage values, respectively associated with the power cells of the variable-speed drive,
d) for each power cell, adapting a control command of the power cell comprising determining a duty cycle of the power cell as a function of the rectified voltage associated with this power cell, during a current phase of supplying the electrical device (100),
wherein the integer P and the activation commands are predefined in the form of a matrix representing the activation commands and with a rank equal to the number of power cells of the variable-speed drive and wherein the variable-speed drive comprises N power cells for each phase among three phases and, for each iteration of index t, t being between 1 and P: M_t = KALL_t × VBALL;
wherein KALL_t represents a 3-line and 3*N column matrix comprising [K1 - K2 K0; K0 K2 -K3; -K1 K0 K3], wherein K1, K2 and K3 are the respective activation commands of the three phases and are N-size vectors taking binary values, a first value corresponding to an activation and a second value corresponding to a deactivation, wherein K0 is a N-size zero vector,
wherein VBALL is a column vector with a length 3N composed as follows [VB1; VB2; VB3], wherein VB1, VB2 and VB3 are N-size vectors of the rectified voltages of the power cells of the respective three phases according to the duty cycle determined in step ii);
wherein M_t is a vector of three voltages measured across the electrical device for a given iteration, the measured voltages corresponding to the three output voltages of the variable-speed drive.

2. The method according to claim 1, wherein adapting a control command of a power cell (101) comprises determining a duty cycle of the power cell (101) as a function of the rectified voltage associated with the power cell.

3. The method according to one of the preceding claims, further comprising analysing (209) the rectified voltages obtained with a view to detecting a deviation with respect to nominal operation.

4. The method according to one of claims 1 to 3, wherein the method is repeated at several distinct instants, and wherein analysing (209) the rectified voltages comprises determining changing trends of the rectified voltages of the power cells, and comparing the trends with nominal operation.

5. The method according to one of the preceding claims, the method being initiated subsequent to stopping the electrical device (100).

6. The method according to claim 5, wherein the method is automatically initiated upon detecting stopping of the electrical device (100).

7. The method according to claim 5, wherein the method is manually initiated subsequent to stopping the electrical device (100).

8. A computer program executable by a processor (300) and comprising instructions for, when executed by the processor, implementing the steps of a method according to any one of claims 1 to 7.

9. A device for controlling a variable-speed drive (102) in charge of powering an electrical device (100), the variable-speed drive comprising Ni low-voltage power cells (101) connected in series for each phase among several phases, N being greater than or equal to 2 and i being a phase index, **characterised in that** the control device comprises:
a processor (300) capable of controlling, by an output interface, the repetition of the next P iterations, P being equal to the number of power cells of the variable-speed drive:
i) activating (201) at each iteration of one single cell of a phase and deactivating the other power cells of said phase of the variable-speed drive, wherein said one activated cell is selected according to predefined activation commands dependent on an iteration index; the cells activated for two different iterations being distinct;
ii) determining a duty cycle of said cell activated to control an output voltage by pulse width modulation of said cell activated in order to achieve an output target voltage to be applied to the electrical device (100);
iii) receiving, via an input interface (302), at least two output voltages of the variable-speed drive (102) across the electrical device (100) for two phases;
the processor (300) being further capable of determining, at the end of the P iterations, from the measured output voltages of the variable-speed drive, rectified voltage values at the output of respective rectifying stages of the power cells of the variable-speed drive, a memory (301) storing the determined rectified voltage values, respectively associated with the power cells of the variable-speed drive;
the processor being configured to adapt for each power cell, a control command of the power cell by determining a duty cycle of the power cell as a function of the rectified voltage associated with this power cell,
wherein the integer P and the activation commands are predefined in the form of a matrix representing the activation commands and with a rank equal to the number of power cells of the variable-speed drive and wherein the variable-speed drive comprises N power cells for each phase among three phases and, for each iteration with an index t, t being between 1 and P: M_t = KALL_t × VBALL;
wherein KALL_t represents a 3-line and 3*N column matrix comprising [K1 - K2 K0; K0 K2 -K3; -K1 K0 K3], wherein K1, K2 and K3 are the respective activation commands of the three phases and are N-size vectors taking binary values, a first value corresponding to an activation and a second value corresponding to a deactivation, wherein KO is a N-size zero vector,
wherein VBALL is a column vector with a length 3N composed as follows [VB 1; VB2; VB3], wherein VB1, VB2 and VB3 are N-size vectors of the rectified voltages of the power cells of the respective three phases according to the duty cycle determined in step ii);
wherein M_t is a vector of three voltages measured across the electrical device for a given iteration, the measured motor voltages corresponding to the three output voltages of the variable-speed drive.

10. A variable-speed drive in charge of three-phase power supply of an electrical device, the variable-speed drive comprising Ni low-voltage power cells connected in series for each phase among several phases, N being greater than or equal to 2 and i being a phase index, and a control device according to claim 9.
